# EUROPEAN PATENT APPLICATION

(11) **EP 1 094 313 A1**
(43) Date of publication of application: **25.04.2001**
(21) Application number: 99308173.6
(22) Date of filing: 18.10.1999
(51) Int. Cl.: G01N 25/72

(54) **Thermographic material analysis**

(71) Applicant: BRITISH AEROSPACE PUBLIC LIMITED COMPANY, Farnborough, Hampshire GU14 6YU (GB)
(72) Inventor: The designation of the inventor has not yet been filed

(57) **Abstract**

In thermography apparatus, a lamp 102 is modulated sinusoidally and a camera 106 captures thermal images at the modulated frequency, but delayed by an adjustable preset delay. A signal delay box 107 is connected between a sinusoidal modulation signal function generator 104 and the camera 106. The delay box introduces a delay to the function generator signal so that the thermal image is captured after a period of time, resulting in an enhanced image.

## Description

The present invention relates to material analysis, and more particularly to material analysis using thermography.

In known lock-in thermography material analysis a sample of a material to be analysed is positioned between a halogen lamp and an infra-red camera. The lamp is switched on and off by a sinusoidally modulated signal so that heat pulses are emitted towards the sample at a particular frequency, generating sinusoidal thermal waves inside the material. Reflections produced by defects and interfaces (normally boundaries between different materials) in the sample interfere with incoming waves transmitted by the lamp to produce a wave pattern at the surface of the material. The infra-red camera captures a thermal image of the wave pattern at the surface of the material.

As the thermal images produced by the camera are captured at the same moment as when the halogen lamp is switched on, the system does not allow for thermal lag. Our studies have shown that it takes an appreciable amount of time for the heat pulses produced by the lamp to be transmitted from the surface of the sample facing the lamp through the thickness of the sample to the sample surface facing the camera. As a result of this, the camera is unable to accurately locate the sinusoidally varying heat pulses and so a poor signal-to-noise ratio is produced. Accordingly, the thermal images produced by the camera are of a "grainy" nature and therefore less useful for analysing imperfections in the material sample. It is often desirable to study imperfections at different depths within the sample. The limitations of the prior art lock-in thermography apparatus described above mean that it does not allow sufficient discrimination of imperfections at selected depths in the sample.

An aim of the present invention is to provide a system which produces improved thermal images for material analysis. One embodiment of the invention is intended to allow thermal images to be produced which represent selected points within the thickness of the material sample.

According to a first aspect of the present invention there is provided material analysis apparatus comprising:
heat emitting means for emitting a series of one or more heat pulses towards a sample material;
means for capturing a series of one or more thermal images of said sample,
and delay means for introducing a variable delay between said emission of said series of pulses and capture of the respective series of images.

In one embodiment the material sample is positioned between said heat pulse emitting means and said thermal imaging means. In a typical example, the heat pulses are emitted at a frequency approximately equal to 0.1 Hz and the delay is within a range of 0 seconds to 3 seconds.

In another embodiment the heat pulse emitting means and the thermal imaging means are positioned facing one surface of said material sample and the delay length is such that the thermal image is captured when energy resulting from the emitted heat pulse is reflected from a selected point within the thickness of the sample to the surface of the sample. The selected point may represent a distance measured from the surface of the sample.

Preferably, the thermal imaging means includes an infra-red camera. The apparatus may further comprise means for storing digital data representing said image captured by said camera.

Preferably, said heat pulse emitting means includes a halogen lamp and means for switching said halogen lamp on and off at a predetermined frequency corresponding to a sinusoidal modulation. The infra-red camera is preferably configured to operate at a frequency of approximately 25Hz such that approximately 25 thermal images are captured per one second and the halogen lamp is switched on and off at a frequency of approximately 0.1Hz such that approximately 250 thermal images are captured in a period of approximately 10 seconds. The 250 thermal images captured are preferably used to produce 4 averaged images. Preferably, 5 said series of pulses are emitted and 5 said series of thermal images are captured such that 20 said averaged images are produced. The 20 averaged images may be used to produce a further averaged image. The delay means may include an operational amplifier circuit connected between said switching means and a personal computer connected to said thermal imaging means.

According to a second aspect of the present invention there is provided a method of analysing a sample material comprising the steps of:
emitting a series of one or more heat pulses towards a sample material, and
capturing a series of one or more thermal images of said sample material, wherein a variable delay is introduced between emission of said thermal pulses and capture of the respective series of images.

The heat pulses may be emitted at a frequency approximately equal of 0.1 Hz and the delay may be within a range of 0 seconds to 3 seconds.

The method may further include a step of selecting a point within the thickness of the sample, and calculating the delay length such that thermal images are captured when energy resulting from the emitted heat pulse is reflected from the selected point to the surface of the sample.

The series of thermal images may be captured at a frequency of approximately 25Hz such that approximately 250 thermal images are captured in a period of approximately 10 seconds. The 250 thermal images are preferably used to produced four averaged images. Preferably, five said series of pulses are emitted and five said series of thermal images are captured such that 20 said averaged images are produced. The 20 averaged images may be used to produce a further averaged image.

Whilst the invention has been described above, it extends to any inventive combination of the features set out above or in the following description.

The invention may be performed in various ways, and, by way of example only, an embodiment thereof will now be described, reference being made to the accompanying drawings, in which:
Figure 1 illustrates schematically a particular embodiment of the present invention wherein a halogen lamp and an infra-red camera are located either side of a material sample, and
Figures 2 to 9 illustrate thermal images and graphical results produced in experimental trials of the apparatus;
Figure 10 is a graphical representation of the experimental results;
Figure 11 illustrates schematically an alternative embodiment of the invention wherein a halogen lamp and an infra-red camera are positioned facing the same surface of a material sample;
Figure 12 illustrates schematically incident and emitted radiation which may be analysed by the embodiment of Figure 11.

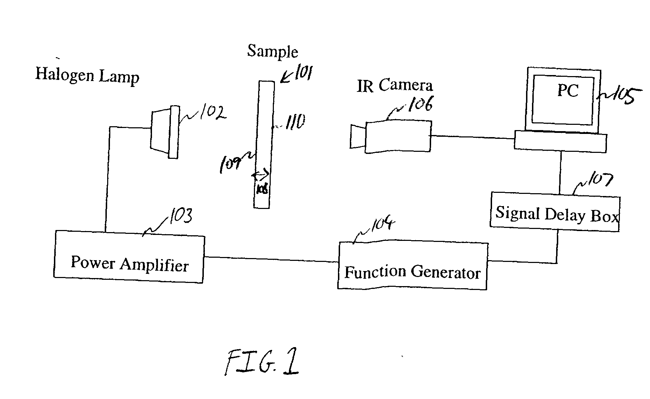

In Figure 1, a sample 101 of the material to be analysed is positioned with one surface 109 facing a halogen lamp 102. An opposite surface 110 of the sample 101 faces an infra-red camera 106. The thickness of the sample 101 between the two opposite surfaces 109 and 110 is indicated by arrows 108. Although in the example of Figure 1 the thickness 108 of the sample material 101 is less than the length of the sample, in this specification the term "thickness" is intended to mean a distance between any two generally opposed surfaces of a material which is to be analysed.

The halogen lamp 102 is connected to a power amplifier 103 driven by a function generator 104 which in use switches the halogen lamp 102 on and off at a predetermined frequency provided by the sinusoidal function generator 104. The lamp 102 emits heat pulses in a direction mainly towards the surface 109 of the sample 101 adjacent to the lamp.

The function generator 104 is also connected via a signal delay box 107 and a personal computer (PC) 105 to the infra-red camera 106. The PC 105 is configured to activate the camera 106 when it receives the signal from function generator 104 via delay box 107. As the box 107 introduces a delay to the signal generated by component 104, the camera 106 captures a thermal image of the surface 110 of the sample 101 after the heat pulse has been emitted by lamp 102. The camera 106 produces digital data representing the thermal image which may be stored in a memory or external storage of the PC 105 for subsequent processing or display. The PC 105 normally uses a series of captured images produced during a specific period of time and processes them in order to produce a final image of enhanced quality. The image capturing may be synchronised with the modulation frequency and up to 250 images may be captured within one cycle (i.e. switching of the lamp on and off) which are then averaged to provide 4 images. Thus, up to 4 signal values may be captured for every pixel of the image during a single cycle. A typical inspection may require 5 such cycles to be completed resulting in the production of 20 averaged thermal images. The image processing may involve summation of elements of the series of captured images and generating an "average" final value from the 20 averaged thermal images.

The signal delay box 107 utilises an operational amplifier circuit to introduce a variable time delay of up to one wavelength of the frequency of the sinusoidal signal generated by function generator 104. Typically a delay in a range of 0 seconds to 3 seconds would be introduced for a modulation frequency at least approximately equal to 0.1Hz.

The delay is of a length such that the infra-red camera 106 captures an image of the surface 110 of sample 101 at a time when energy resulting from a heat pulse most recently emitted by lamp 102 has had sufficient time to be transmitted at least partly through the thickness 108 of the sample. The calculation of the time delay may also take into account further user-defined factors, e.g. the type of material, the type of lamp used, etc. The signal delay box 107 includes means for varying the resulting delay.

This technique enables the camera and PC system to accurately locate the sinusoidal heat pulse from the halogen lamp which improves the signal to noise ratio which in turn minimises the effect of the grainy appearance of the images produced. The improved thermal image quality means that analysis results based on the images can be more reliable than using conventional lock-in thermography apparatus.

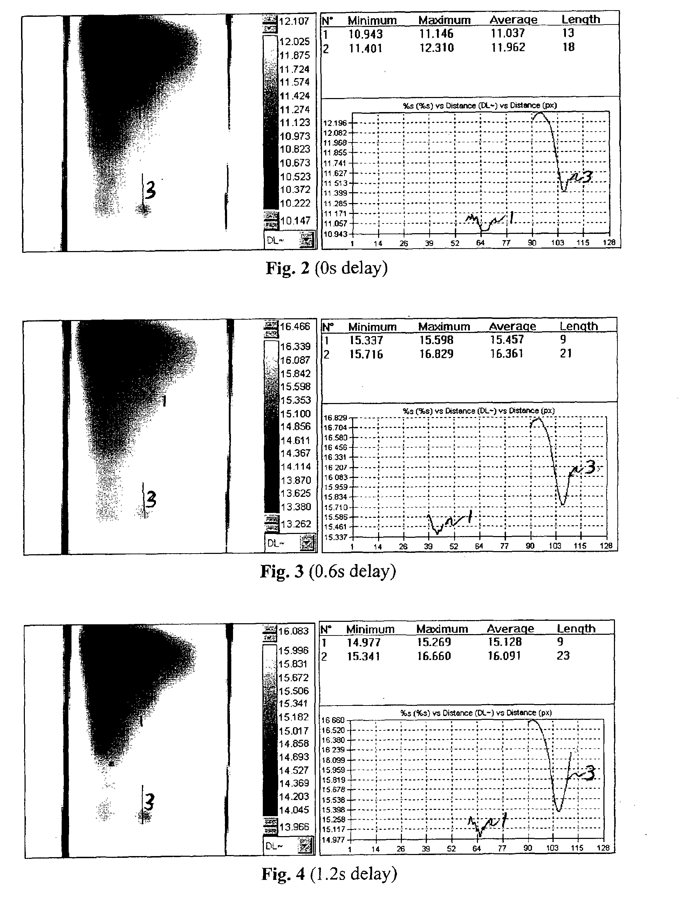

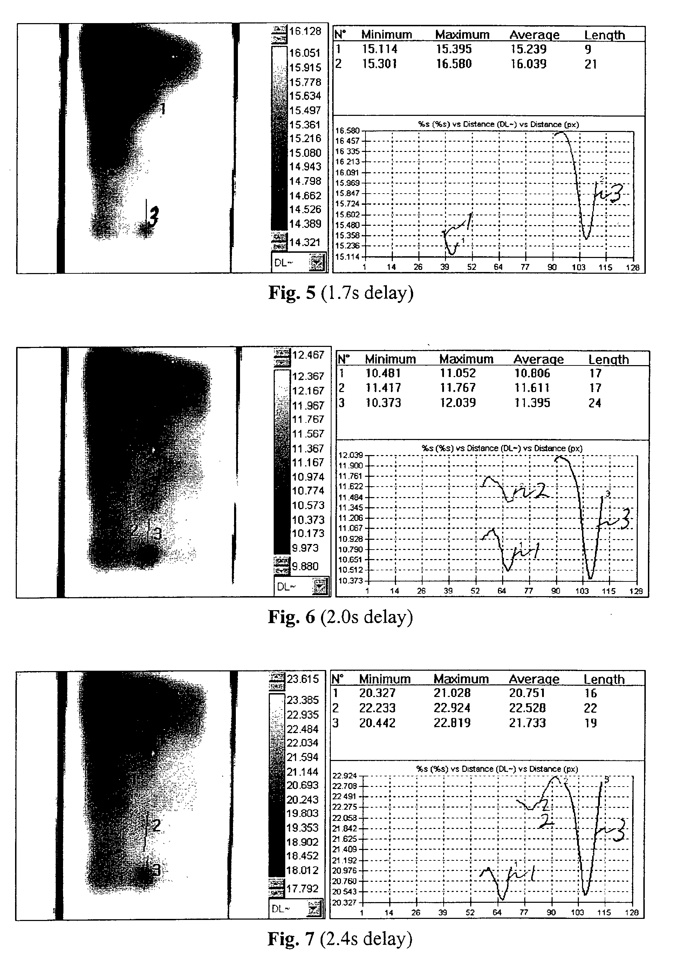

Figures 2 to 9 illustrate images taken of a 6mm thick carbon fibre reinforced polymers (CFRP) plate with three polytetrafluoroethylene (PTFE) inclusions at various depths. The shaded images shown on the left hand side of the Figures represent the temperature variation over the surface of the sample facing the camera. Darker shading corresponds to lower temperatures, which allows inclusions in the sample to be identified, as their presence disrupts the flow of the heat pulse energy through the sample to the surface.

The images of Figures 2 to 9 were taken with increasing amounts of signal delay. An eight position delay box was constructed for the experimental trials providing a maximum of 3.0 seconds delay time with a modulation frequency of 0.1 Hz. The preferred embodiment may function with frequencies of up to 0.5 Hz. Generally, the lower the frequency, the more time the energy resulting from each heat pulse has to travel through the thickness of the sample before the next pulse is emitted.

In Figure 2, the amplitude image was taken with no delay (i.e. 0 seconds), whilst Figures 3 to 9 were taken with delays of 0.6 seconds, 1.2 seconds, 1.7 seconds, 2.0 seconds, 2.4 seconds, 2.6 seconds, and 3.0 seconds, respectively. The regions of the images marked 1, 2 and 3 refer to top, middle and bottom inclusion sites, respectively, on the images.

The PC of the thermography apparatus which was used to produce the Figures allows a line to be drawn between two points on the thermal image. The Y-axes of the graphs on the right hand side of the Figures show the variation in digital level between the two end points of the lines, and the x-axes represents the positions of the lines drawn on the thermal image. Information regarding the minimum, maximum and average temperature between the end points of each line, as well as the line lengths is given above the graph.

It can be seen from the images that the PTFE sites become more visible as the delay time is increased. The middle inclusion (i.e. the one marked 2) only becomes visible for delay times between 2.0 and 2.6 seconds. The digital level (DL) for each PTFE inclusion site at a given Delay time is given in the table below:

| Delay Time and Digital Level for each PTFE Inclusion Site. | | | |
|---|---|---|---|
| Delay Time (S) | Inclusion 1 (DL) | Inclusion 2 (DL) | Inclusion 3 (DL) |
| 0.0 | 0.203 | - | 0.909 |
| 0.6 | 0.261 | - | 1.113 |
| 1.2 | 0.292 | - | 1.319 |
| 1.7 | 0.281 | - | 1.279 |
| 2.0 | 0.571 | 0.350 | 1.666 |
| 2.4 | 0.701 | 0.691 | 2.377 |
| 2.6 | 1.120 | 0.312 | 3.499 |
| 3.0 | 0.445 | - | 1.626 |

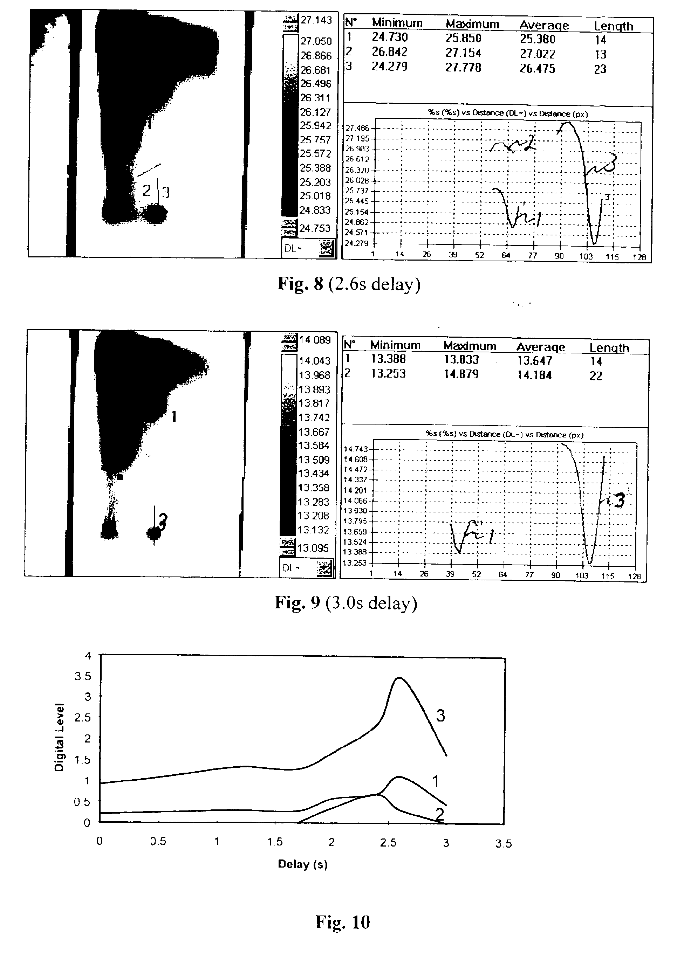

Figure 10 represents the contents of the above table graphically. It can be seen that as the delay is increased, the PTFE inclusions become more visible as the amplitude of the digital level increases up to a delay of between 2.0 and 2.6s, after which the digital level decreases.

The three graph lines labelled 1, 2 and 3 correspond to the amplitude of the thermal signal from the respectively numbered inclusion which has been calculated from the charts on the right of Figures 2 to 9 by subtracting the minimum from the maximum digital level along the line profile drawn on the image to the left of the graph on Figures 2 to 9.

The image is, therefore, enhanced which significantly improves the overall capability of the material analysis apparatus.

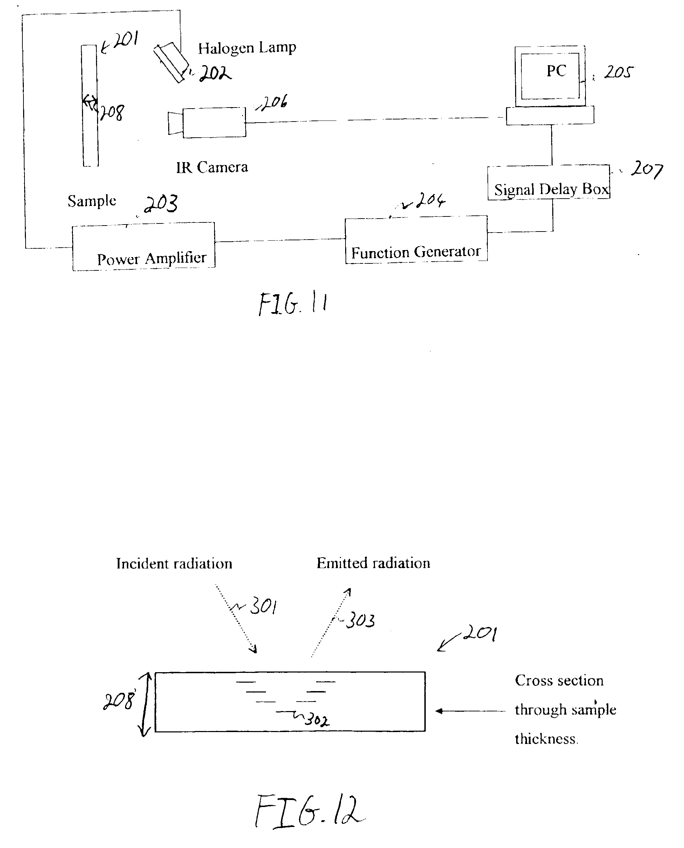

In the arrangement shown in Figure 1, the camera receives heat pulses transmitted through the thickness of the sample. In an alternative embodiment shown in Figure 11, a camera 206 receives heat pulses reflected from the thickness of the sample. Thus in Figure 11 a halogen lamp 202 and an infra-red camera 206 are positioned facing the same side of a sample 201 of a material to be analysed, that is, otherwise the components are substantially identical and will not be described again.

Figure 12 illustrates schematically a magnified section through the thickness 208 of sample material 201. A heat pulse generated by the halogen lamp 202 diverts a beam and incident radiation 301 towards the surface of the sample 201 facing the lamp 202 and the camera 206. The radiation enters the surface of the sample and travels by means of lattice vibrations (phonons) within the material. If delaminations (e.g. represented by the lines 302) or imperfections are present within the material at a point through which the energy resulting from incident radiation 301 travels, then at least some of the energy is reflected and travels back up towards the surface where it is emitted in the form of thermal radiation. The resulting thermal radiation, represented by arrow 303, is transmitted from the surface of the sample to the lens of the camera 206.

It can be seen that a longer delay time is introduced between the incident and emitted radiation for delaminations located further from the surface of the sample. The signal delay box 207 is used to apply this delay time to produce clearer images of delaminations at different depths within the sample.

Image enhancement of a delamination at a certain depth depends upon the amount of delay introduced between the function generator 204 and the PC 205 by the signal delay box 207. This technique effectively allows a "slicing" of a composite sample material to analyse delaminations at particular depths within it.

Compared with conventional thermographic imaging, the thermal image used by the present lock-in thermography imaging system is independent of external reflections, inhomogeneous illuminations, and emissivity, and so can be adapted for various inspection environments. The system is also reasonably portable.

## Claims

1. Material analysis apparatus including:
means for emitting a series of one or more heat pulses at a sample material;
means for capturing a series of one or more thermal images of said sample; and
delay means for introducing a variable delay between said emission of said series of thermal pulses and capture of the respective series of images.

2. Apparatus according to Claim 1, wherein said material sample is positioned between said heat pulse emitting means and said thermal imaging means.

3. Apparatus according to Claim 2, wherein said series of pulses is emitted at a frequency approximately equal to 0.1 Hz and said delay is within a range of 0 seconds to 3 seconds.

4. Apparatus according to Claim 1, wherein said heat pulse emitting means and said thermal imaging means are positioned facing the same surface of said material sample.

5. Apparatus according to Claim 4, wherein said delay length is such that the thermal image is produced when energy resulting from the emitted heat pulse is reflected from a selected point within the thickness of the sample to the surface of the sample.

6. Apparatus according to Claim 5, wherein said selected point represents a distance measured from the surface of the sample.

7. Apparatus according to any one of the preceding claims, wherein said thermal imaging means includes an infra-red camera.

8. Apparatus according to Claim 7, further including means for storing digital data representing said image captured by said camera.

9. Apparatus according to any one of the preceding claims, wherein said heat pulse emitting means includes a halogen lamp; and
means for switching said halogen lamp on and off at a predetermined frequency corresponding to a sinusoidal modulation.

10. Apparatus according to Claim 9, when dependent upon Claim 8, wherein the infra-red camera is configured to operate at a frequency of approximately 25Hz such that it captures approximately 25 thermal images per one second and the halogen lamp is switched on and off at a frequency of approximately 0.1Hz such that approximately 250 thermal images are captured in a period of approximately 10 seconds.

11. Apparatus according to Claim 10, wherein the 250 thermal images captured are used to produce four averaged images.

12. Apparatus according to Claim 11, wherein five said series of pulses are emitted and five said series of thermal images are captured such that twenty said averaged images are produced.

13. Apparatus according to Claim 12, wherein the twenty averaged images are used to produce a further averaged image.

14. Apparatus according to any one of Claims 9 to 13, wherein said means for delaying includes an operational amplifier circuit connected between said switching means and a personal computer connected to said thermal imaging means.

15. A method of analysing a material comprising steps of:
emitting a series of one or more heat pulses towards a sample material, and
capturing a series of one or more thermal images of said sample, wherein a variable delay is introduced between said emission of said series of pulses and capture of the respective series of images.

16. Method according to Claim 15, wherein said series of heat pulses are emitted at a frequency approximately equal to 0.1 Hz and said delay length is within a range of 0 seconds to 3 seconds.

17. Method according to Claim 15, further including a step of selecting a point within the thickness of the sample,
wherein the delay length is such that the thermal image is captured when energy resulting from the emitted heat pulse is reflected from the selected point to the surface of the sample of which the thermal image is to be produced.

18. Method according to Claim 16, wherein the series of thermal images are captured at a frequency of approximately 25Hz such that approximately 250 thermal images are captured in a period of approximately 10 seconds.

19. Method according to Claim 18, wherein the 250 thermal images captured are used to produce four averaged images.

20. Method according to Claim 19, wherein five said series of pulses are emitted and five said series of thermal images are captured such that 20 said averaged images are produced.

21. Method according to Claim 20, wherein the 20 averaged images are used to produce a further averaged image.
